# FASCICULE DE BREVET EUROPEEN

(11) **EP 1 316 137 B1**
(45) Date de publication et mention de la délivrance du brevet: **14.07.2010**
(21) Numéro de dépôt: 01972139.8
(22) Date de dépôt: 05.09.2001
(51) Int. Cl.: H02M 1/00

(54) **PROCEDE ET DISPOSITIF DE COMMANDE D'ALIMENTATION**
STROMVERSORGUNGSSTEUERVORRICHTUNG UND -VERFAHREN
METHOD AND DEVICE FOR CONTROLLING POWER SUPPLY

(30) Priorité: 05.09.2000 FR 0011282
(43) Date de publication de la demande: 04.06.2003
(73) Titulaire: Electricité de France, 75008 Paris (FR)
(72) Inventeur: GAUDIN, Christophe, F-92110 Clichy (FR); KARIMI, Mohammed, F-91400 Orsay (FR)
(74) Mandataire: Texier, Christian
(86) Numéro de dépôt international: PCT/FR2001/002748
(87) Numéro de publication internationale: WO 2002/021668

(56) Documents cités:
- US-A- 5 283 727
- US-A- 5 410 221
- US-A- 5 682 086
- US-A- 5 917 717
- US-A- 6 034 489
- QIAN J ET AL: "NEW CHARGE PUMP POWER FACTOR CORRECTION ELECTRONIC BALLAST WITH A WIDE RANGE OF LINE INPUT VOLTAGE" ANAHEIM, CA, FEBR. 15 - 19, 1998,NEW YORK, NY: IEEE,US, 15 février 1998 (1998-02-15), pages 216-222, XP000873670 ISBN: 0-7803-4341-7

## Description

La présente invention concerne les alimentations électroniques de puissance.

Elle trouve en particulier avantageusement application pour la réalisation d'onduleurs basse fréquence ou pour la commande à vitesse variable de moteurs électriques à induction.

Un but général de l'invention est de proposer une alimentation électronique haute puissance qui présente une pollution harmonique faible et permette de réaliser une commande à fréquence variable.

La technique actuelle pour commander le courant d'alimentation des moteurs à induction avec une faible pollution harmonique consiste en l'insertion d'un étage de type élévateur (« boost »). Dans cet étage supplémentaire, le contrôle du courant est effectué à travers une inductance série par les commutations d'un interrupteur.

Un tel circuit permet le filtrage actif du courant et l'obtention en entrée de la charge d'un courant à intensité contrôlée, notamment par exemple d'un courant quasi-sinusoïdal.

L'avantage de cette solution est qu'elle procure un courant « propre », c'est-à-dire dont les émissions harmoniques restent faibles. Cette solution est donc étudiée actuellement par les industriels pour passer la norme 1000-3-2 sur les limites d'émissions harmoniques. En particulier, sont concernées les applications de vitesse variable associées aux moteurs à induction (par exemple un climatiseur à vitesse variable ou de l'électroménager à vitesse variable).

Toutefois, cette solution présente l'inconvénient d'un surcoût relativement important, puisqu'elle requiert un étage supplémentaire, et en particulier un interrupteur statique supplémentaire.

En parallèle, de nouvelles structures électroniques « propres » sont apparues dans le domaine de l'éclairage fluo-compact. Ces structures mettent en oeuvre une alimentation de type pompe de charge qui repose sur l'utilisation d'oscillations haute fréquence. Tout au long de l'arche de tension d'entrée, on charge une capacité de stockage au travers de ces oscillations. Cette charge est progressive avec le niveau de tension d'entrée. On obtient en sortie une forme de courant proche de la sinusoïde donc « propre » et un haut facteur de puissance.

De telles structures sont destinées à l'alimentation de ballasts électroniques. Ce sont généralement des structures en demi-pont comportant un circuit à résonance série. La fréquence de commutation des interrupteurs du ou des demi-ponts est égale à la fréquence propre du circuit résonant. On obtient donc un signal de sortie dont la fréquence est fixe, égale à la fréquence des oscillations HF du circuit résonant, soit en général 30 kHz en éclairage.

De telles structures ne permettent donc pas de réaliser une commande variable.

L'article de QIAN J. et al., « New charge pump power factor correction electronic ballast with a wide range of line input voltage » (15 - 19 février 1998, IEEE) décrit un ballast électronique pour l'alimentation de lampes dans lequel la fréquence de découpage des interrupteurs est modifiée pour commander la courant moyen délivré et fournir une puissance constante.

L'invention propose quant à elle un dispositif de commande d'alimentation comprenant un montage comportant une source de tension, un circuit onduleur à résonance qui est alimenté par ladite source et qui comporte plusieurs demi-ponts d'interrupteurs montés aux bornes de moyens capacitifs, ledit montage comportant également des moyens pour commander l'ouverture et la fermeture de ces interrupteurs et des moyens pour modifier cette fréquence de découpage, un pont d'éléments formant diodes monté entre la source et les demi-ponts du circuit onduleur, ainsi que des moyens capacitifs de résonance montés entre les points milieux des branches du pont de diodes et les points milieux des demi-ponts du circuit onduleur, **caractérisé en ce que** les moyens de résonance comportent en outre des moyens inductifs montés de part et d'autre du pont d'élément formant diodes.

Un tel dispositif permet de modifier la commande de découpage pour obtenir des fréquences de sortie de l'ordre du Hz en commandant les interrupteurs avec des fréquences de découpage de l'ordre du kHz.

L'invention propose également un procédé de commande d'alimentation comprenant un dispositif du type précité, selon lequel on modifie la fréquence de découpage des moyens pour commander l'ouverture et la fermeture des interrupteurs.

L'invention propose notamment un onduleur basse fréquence ou un dispositif pour la commande d'un moteur à induction, **caractérisé en ce qu**'il est constitué par un tel dispositif d'alimentation.

D'autres caractéristiques et avantages de l'invention ressortiront encore de la description qui suit, laquelle est purement illustrative et non-limitative et doit être lue en regard des dessins annexés sur lesquelles :
- la figure 1 est un schéma d'un montage conforme à une mise en oeuvre de l'invention,
- la figure 2 illustre le courant de charge obtenu aux bornes de la charge avec ce montage,
- la figure 3 illustre un montage possible pour la réalisation d'une alimentation triphasée,
- la figure 4 illustre une autre variante de montage possible.

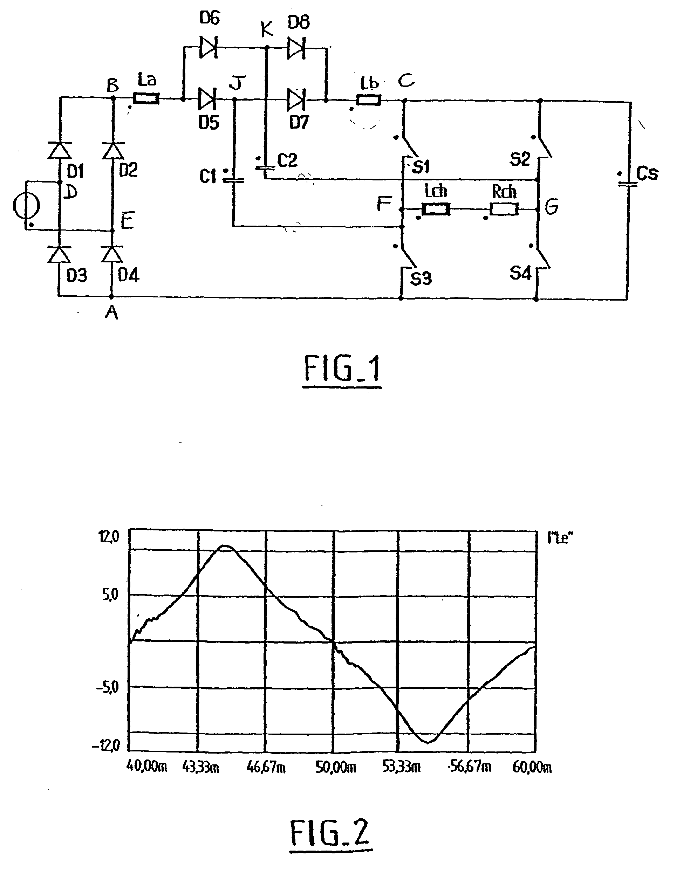

La figure 1 représente un circuit pompe de charge à deux demi-pont, apte à permettre de réaliser une alimentation monophasée conforme à un mode de mise en oeuvre de l'invention.

Ce circuit comprend deux branches ÀDB et AEB connectées en parallèle entre un point A et un point B. Chacune des branches comprend deux diodes montées en série. La diode D1 (respectivement D2) a sa cathode en B et son anode en D (respectivement E).

Ce circuit comporte en outre :
- un générateur de signal sinusoïdal basse fréquence dont une borne est connectée sur la première branche au point D entre les diodes D1 et D3, et l'autre borne est connectée sur la deuxième branche au point E entre les diodes D2 et D4,
- un pont de diodes constitué par deux branches parallèles BJC et BKC connectées entre le point B et un point C comprenant chacune deux diodes. La diode D5 (respectivement D6) a son anode en B et sa cathode en J (respectivement K) et est montée en série avec la diode D7 (respectivement D8). La diode D7 (respectivement D8) est montée entre le point J et le point C dans le même sens que la diode D5 (respectivement D6).
- un onduleur constitué par un pont d'interrupteurs en H connecté entre les points C et A comprenant quatre interrupteurs, S1 et S3 sur la branche CFA, S2 et S4 sur la branche CGA. S1 (respectivement S2) relie les points C et F (respectivement G), et S3 (respectivement S4) relie les points F (respectivement G) et A. La charge est connectée aux points F et G.
- un condensateur de stockage Cs monté en parallèle avec le pont en H entre les points C et A,
- deux circuits résonants constitués de deux branches connectées respectivement entre les points J et F, et K et G et comprenant respectivement un condensateur C1, C2, ainsi que deux inductances La et Lb de chaque côté du pont de diodes. Dans ce montage, les inductances ne sont pas associées aux capacités, mais partagées par l'ensemble des capacités de résonance.

Les interrupteurs S1 et S4 d'une part et S2 et S3 d'autre part sont ouverts et fermés de façon simultanée, et les interrupteurs d'un même demi-pont sont commandés en alternance (lorsque S1 est ouvert, S3 est fermé, et vice versa).

Le cycle d'ouverture et de fermeture des interrupteurs du pont en H est commandé à une fréquence que l'on fait varier pour contrôler la puissance d'alimentation de la charge et qui est inférieure à la fréquence de résonance des circuits oscillants.

Ainsi que l'illustre la figure 2, le fonctionnement (pour un rapport cyclique d'ouverture/fermeture qui en l'occurrence est de 50 %, mais qui pourrait être différent, selon la commande que l'on cherche à réaliser) est alors le suivant :
□ Phase 1 : S1 et S4 sont ouverts, S2 et S3 sont fermés, D5 est passante, D7 bloquée.

Le condensateur C1 du circuit résonant se charge à travers La, C1 et l'interrupteur S3 jusqu'à ce que la diode D7 devienne passante ou que le courant dans La s'annule.
□ Phase 2 : S1 et S4 sont ouverts, S2 et S3 sont fermés, D5 et D7 passantes.

Si la diode D7 est devenue passante, l'alimentation va charger la capacité de stockage Cs directement à travers La et Lb, jusqu'à ce que le courant s'annule.
□ Phase 3 : S1 et S4 sont ouverts, S2 et S3 sont fermés, D5 et D7 sont bloquées.

Quand le courant s'est annulé dans les inductances, l'alimentation est totalement découplée de la charge. La capacité Cs continue à fournir le courant de charge.
□ Phase 4 : S1 et S4 sont fermés, S2 et S3 sont ouverts, D7 est passante

L'amorçage de S1 entraîne une oscillation de courant dans les circuits résonnants qui se termine par la conduction des diodes D6 et D7 (ou l'annulation du courant dans les inductances) et l'inversion de la tension dans les capacités C1 et C2.
□ Phases 5 et 6 : même situations que dans les phases 1 et 2 en inversant D5 et D7.

Le courant de charge alors obtenu aux bornes de la charge est du type illustré sur la figure 2.

On comprend aisément, qu'il est possible, en ajustant la fréquence du cycle d'ouverture fermeture des interrupteurs, de modifier l'intensité moyenne du courant de charge et ainsi de réguler la puissance fournie à la charge.

On notera que les inductances La et Lb positionnées de part et d'autre du pont de diodes - outre qu'elles permettent un « découplage » plus important entre la source d'alimentation en entrée et la capacité de stockage en sortie - permettent de réduire fortement les harmoniques.

On notera que l'invention trouve avantageusement application dans le cas d'une alimentation triphasée.

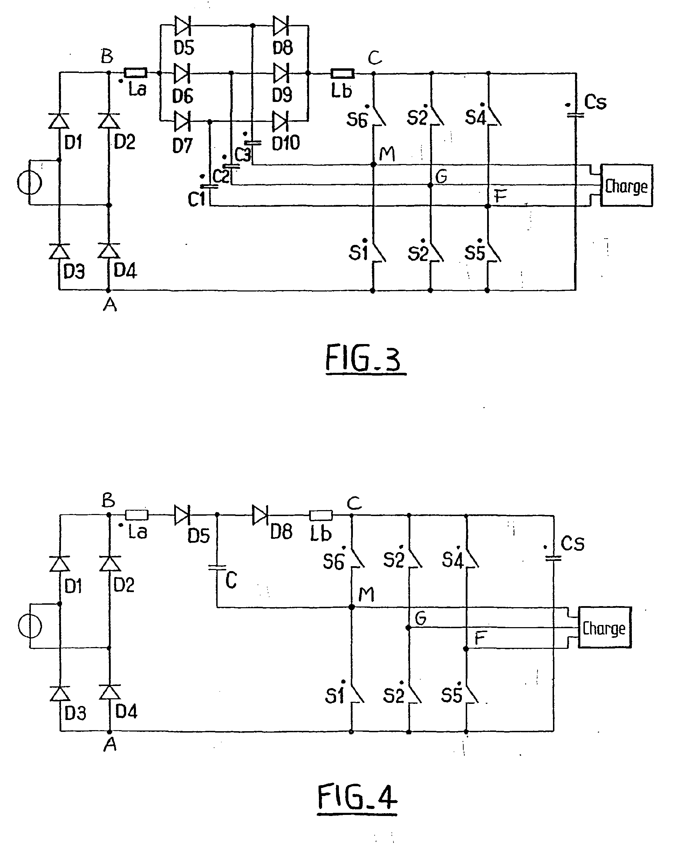

C'est ce qu'illustre le montage de la figure 3. Par rapport au montage de la figure 1, ce montage comprend deux diodes D9 et D10 supplémentaires montées en parallèle entre les points B et C, un demi-pont supplémentaire composé des interrupteurs S5 et S6, et un troisième circuit résonant Lac3. La charge est commandée en triphasée, elle est connectée aux points F, G et M. Les interrupteurs sont commandés en modulation à largeur d'impulsions à la même fréquence mais déphasés de telle sorte que les trois demi-ponts alimentent successivement la capacité de stockage.

On démontre que la modification de la fréquence de découpage de l'onduleur d'un tel montage permet de réguler la puissance fournie à la charge.

Les avantages de ce montage sont alors similaires à ceux exposés ci-dessus en référence au montage de la figure 1. En outre, ce montage permet d'avoir à n'utiliser que deux inductances (au lieu de 3 dans le cas d'un montage où les inductance seraient en série avec les capacités C1, C2 et C3).

Une structure du type de celles qui viennent d'être décrites peut avantageusement être utilisée pour la réalisation d'onduleurs à modulations à largeur d'impulsions ou pour la réalisation de variateurs de vitesses.

A titre d'exemple, elle permet des puissances de sortie de 1 kW et des fréquences de sortie de 1 à 50 kHz, ce qui dans le cas de la commande de moteur à induction répond au besoin des applications électroménagers.

Le dimensionnement des différents composants se fait avantageusement de la façon suivante : on choisit les valeurs des différentes capacités en fonction de la puissance souhaitée. Puis, la valeur de l'inductance Lb est fixée de façon à obtenir une fréquence de résonance deux fois supérieure à la fréquence de commutation maximale des interrupteurs (transistors). Enfin, la valeur de La est ajustée pour diminuer le taux d'harmoniques sans changer le comportement global du circuit.

D'autres variantes de réalisation sont bien entendu encore envisageables.

Notamment, il peut avantageusement être prévu sur les circuits qui viennent d'être décrits des moyens permettant, en cours de fonctionnement, de déconnecter indépendamment les uns des autres les sous-circuits oscillants auxquels les points milieux des différents demi-ponts d'interrupteurs sont connectés. Cette déconnexion peut par exemple être réalisée au moyen d'interrupteurs commandés disposés sur les différentes branches reliant les points milieux des demi-ponts d'interrupteurs aux sous-circuits oscillants.

En variante encore, dans le cas d'un montage triphasé, il peut être possible de réaliser une alimentation propre avec un seul circuit résonnant.

Un exemple de mode de réalisation en ce sens est illustré sur la figure 4. Dans ce mode de réalisation, les diodes D6, D7, D9 et D10, ainsi que les condensateurs C1 et C2 sont supprimés, seul l'un des bras de l'onduleur (celui en l'occurrence constitué des interrupteurs S1 et S6) étant relié au circuit résonnant La, C.

## Revendications

1. Dispositif de commande d'alimentation comprenant un montage comportant une source de tension, un circuit onduleur à résonance (S1-S4, Lch, Rch) qui est alimenté par ladite source et qui comporte plusieurs demi-ponts d'interrupteurs montés aux bornes de moyens capacitifs (CS), ledit montage comportant également des moyens pour commander l'ouverture et la fermeture de ces interrupteurs et des moyens pour modifier cette fréquence de découpage, un pont de diodes (D5-D8) monté entre la source et les demi-ponts du circuit onduleur, ainsi que des moyens capacitifs (C1, C2) de résonance montés entre les points milieux des branches du pont de diodes et les points milieux des demi-ponts du circuit onduleur, **caractérisé en ce que** les moyens de résonance comportent en outre des moyens inductifs (La, Lb) montés de part et d'autre du pont de diodes.

2. Dispositif selon la revendication 1, **caractérisé en ce qu'**il comporte des moyens aptes à déconnecter sélectivement les points milieux des différents ponts d'interrupteurs et les moyens de résonance qui y sont reliés.

3. Dispositif de commande triphasé selon l'une des revendications 1 ou 2.

4. Dispositif selon la revendication 2, **caractérisé en ce que** le point milieu d'un seul des demi-ponts du circuit onduleur est relié directement à des moyens de résonance.

5. Dispositif selon l'une des revendications 1 à 4, **caractérisé en ce que** les interrupteurs sont commandés en modulation à largeur d'impulsions.

6. Onduleur basse fréquence, **caractérisé en ce qu'**il est constitué par un dispositif d'alimentation selon l'une des revendications 1 à 5.

7. Dispositif pour la commande d'un moteur à induction **caractérisé en ce qu'**il est constitué par un dispositif d'alimentation selon l'une des revendications 1 à 5.

8. Dispositif de commande d'alimentation selon l'une des revendications précédentes, **caractérisé en ce que** les interrupteurs sont commandés en modifiant la fréquence de découpage.

## Claims

1. A power supply control device comprising a circuitry including a voltage source, a resonant inverter circuit (S1-S4, Lch, Rch) powered by said source and comprising a plurality of switch half-bridges connected to the terminals of capacitor means (Cs), said circuitry also including means for controlling the opening and closing of said switches and means for modifying the chopper frequency, a diode bridge (D5-D8) connected between the source and the half-bridges of the inverter circuit, and resonant capacitor means (C1, C2) connected between the midpoints of the branches of the diode bridge and the midpoints of the half-bridges of the inverter circuit, the device being **characterized in that** the resonant means further comprise inductor means (La, Lb) connected on either side of the diode bridge.

2. A device according to claim 1, **characterized in that** it includes means suitable for selectively disconnecting the midpoints of the various interrupter bridges and the resonant means connected thereto.

3. A three-phase control device according to claim 1 or claim 2.

4. A device according to claim 2, **characterized in that** the midpoint of only one of the half-bridges of the inverter circuit is connected directly to the resonant means.

5. A device according to any one of claims 1 to 4, **characterized in that** the switches are controlled under pulse width modulation.

6. A low frequency inverter, **characterized in that** it is constituted by a power supply device according to any one of claims 1 to 5.

7. A device for controlling an induction motor, **characterized in that** it is constituted by a power supply device according to any one of claims 1 to 5.

8. A method of controlling power supply according to any preceding claim, **characterized in that** the switches are controlled by modifying the chopper frequency.

## Patentansprüche

1. Vorrichtung zur Steuerung der Versorgung, eine Montage umfassend, die eine Spannungsquelle umfasst, einen Resonanzwechselrichterkreis (S1-S4, Lch, Rch), der von der Quelle versorgt wird und der mehrere Schalter-Halbbrücken umfasst, die an den Klemmen kapazitiver Mittel (Cs) montiert sind, wobei die Montage ebenfalls Mittel zur Steuerung des Öffnens und des Schließens dieser Schalter und Mittel zur Änderung dieser Pendelfrequenz, eine zwischen der Quelle und den Halbbrücken des Wechselrichterkreises montierte Diodenbrücke (D5-D8) sowie kapazitive Resonanzmittel (C1, C2) umfasst, die zwischen den Mittelpunkten der Abzweigungen der Diodenbrücke und den Mittelpunkten der Halbbrücken des Wechselrichterkreises montiert sind, **dadurch gekennzeichnet, dass** die Resonanzmittel weiterhin induktive Mittel (La, Lb) umfassen, die auf der einen und der anderen Seite der Diodenbrücke montiert sind.

2. Vorrichtung nach Anspruch 1, **dadurch gekennzeichnet, dass** sie Mittel umfasst, die imstande sind, die Mittelpunkte selektiv von den verschiedenen Schalterbrücken abzuschalten und die dort verbundenen Resonanzmittel.

3. Dreiphasige Steuervorrichtung nach einem der Ansprüche 1 oder 2.

4. Vorrichtung nach Anspruch 2, **dadurch gekennzeichnet, dass** der Mittelpunkt einer einzigen der Halbbrücken des Wechselrichterkreises direkt mit Resonanzmitteln verbunden ist.

5. Vorrichtung nach einem der Ansprüche 1 bis 4, **dadurch gekennzeichnet, dass** die Schalter impulsbreitenmodulierend gesteuert werden.

6. Niederfrequenz-Wechselrichter, **dadurch gekennzeichnet, dass** er von einer Versorgungsvorrichtung nach einem der Ansprüche 1 bis 5 gebildet wird.

7. Vorrichtung zur Steuerung eines Induktionsmotors, **dadurch gekennzeichnet, dass** er von einer Versorgungsvorrichtung nach einem der Ansprüche 1 bis 5 gebildet wird.

8. Vorrichtung zur Steuerung der Versorgung nach einem der vorangehenden Ansprüche, **dadurch gekennzeichnet, dass** die Schalter durch Änderung der Pendelfrequenz gesteuert werden.
